# EUROPEAN PATENT SPECIFICATION

(11) **EP 3 397 550 B1**
(45) Date of publication and mention of the grant of the patent: **22.09.2021**
(21) Application number: 16849916.8
(22) Date of filing: 27.12.2016
(51) Int. Cl.: B62K 25/08, B62K 25/04

(54) **MOTORCYCLE WITH MULTI-CONFIGURATION CHASSIS**
MOTORRAD MIT MULTIKONFIGURATIONSCHASSIS
MOTOCYCLETTE DOTÉE D'UN CHÂSSIS À CONFIGURATIONS MULTIPLES

(30) Priority: 31.12.2015 IT UB20151269
(43) Date of publication of application: 07.11.2018
(73) Proprietor: Berti, Giacomo, 54033 Carrara (MS) (IT)
(72) Inventor: Berti, Giacomo, 54033 Carrara (MS) (IT)
(74) Representative: Mari, Marco Giovanni
(86) International application number: PCT/IT2016/000309
(87) International publication number: WO 2017/115393

(56) References cited:
- WO-A1-2010/079093
- DE-A1- 3 029 373
- JP-A- S6 018 476
- JP-A- S60 234 087
- JP-A- S61 235 285
- US-A- 5 201 384
- US-A1- 2006 151 225
- US-B1- 6 899 193

## Description

The invention relates to the motorcycling sector.

More in detail, the invention relates to a motorcycle with multi-configuration chassis comprising kinematic mechanism assemblies by means of which the configuration of the motorcycle can be changed.

In the description below, although reference will mainly be made to a motorcycle, the multi-configuration chassis described and claimed can also refer, "mutatis mutandis", to other motor- or pedal-driven vehicles, such as bicycles, tricycles, etc.

The invention also relates to a multi-body kinematic mechanism for a rear fork assembly of a motorcycle having a rigid chassis, adapted to allow the configuration of the motorcycle to be varied.

There are known motorcycles comprising:
- a rigid chassis assembly for supporting the engine and the auxiliary fuel feed and mechanical devices;
- a rear fork assembly;
- a front fork assembly;
- a saddle assembly,
where said rear fork, front fork and saddle assemblies are fitted to said rigid chassis assembly without the possibility of changing the configuration thereof easily and rapidly and without modifying the response of the suspensions associated with the rear and front fork assembly.

WO 2010/079093 A1 discloses in accordance with the preamble of claim 1, a motorcycle with multi-configuration chassis adapted to allow three adjustments selected from the following: saddle assembly tilt, front fork assembly lengthening, rear fork assembly lengthening.

The most widely used rear fork assemblies of known type are:
- direct, in which the suspension is coupled directly to the swing arm, as in double cross systems;
- with linkages, in which the suspension is connected by means of a system of levers and arms, which allow a response of the non-linear suspension to be obtained. Generally, the linkage system is used to obtain low spring compression in the initial portion of wheel travel, so as to have greater riding comfort on uneven ground, and compression of the spring is then increased gradually as the travel of the wheel increases.
- a cantilever system, consisting of a swing arm with a supplementary triangular structure that acts on a shock absorber arranged horizontally, which can operate in compression or in extension.

JP S60 234087 A discloses a motorcycle having the possibility of changing the asset of a motorcycle during movement, to improve the response to sudden accelerations or decelerations by acting essentially on the adjustment and compensation of the response of the front and rear shock absorbers, when the motorcycle is in motion, for example in order to compensate for the forward overhang movements, to which the user is subjected, during braking.

However, none of these systems is without defects, nor do they allow rapid transition from one configuration to another without modifying the response of the shock absorber.

The object of the invention is to define a motorcycle with multi-configuration chassis that allows the configuration of the motorcycle to be easily and rapidly changed, without having to modify the transmission or the suspensions of the vehicle.

The object of the invention is achieved with a motorcycle with multi-configuration chassis according to the independent claim 1.

The main advantage of the present invention lies in the fact that by combining the various adjustments allowed by variation of the length of a hydraulic or electric cylinder belonging to the different kinematic mechanisms associated with the front fork, rear fork and saddle assembly, a large number of configurations of the motorcycle are obtained.

The extension or retraction of a hydraulic or electric cylinder belonging to said kinematic mechanisms allows an increase or a decrease of the pitch of the motorcycle and/or a decrease or lowering of the height of the saddle from the ground to be obtained.

Further features and advantages of the invention will be more evident from the more detailed description set forth below, with the aid of the drawings, which show a preferred implementation thereof, illustrated by way of non-limiting example, wherein:

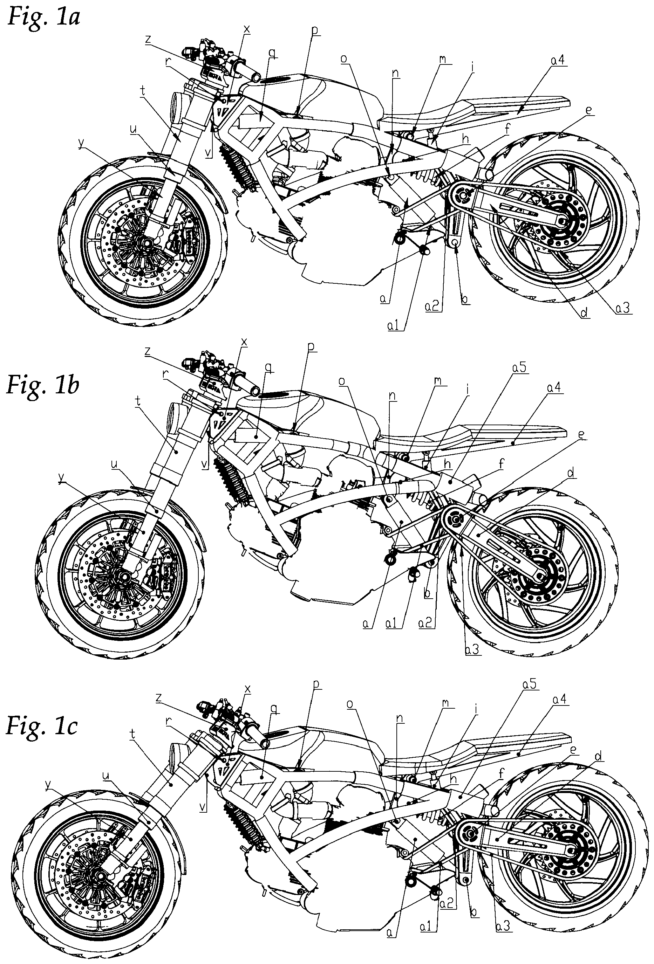

- Figs. 1a, 1b, 1c show, in an axonometric view, a motorcycle with multi-configuration chassis according to the invention, illustrated in three different configurations of the countless configurations in which the motorcycle can be configured;
- Fig. 2 shows, in a partially sectioned axonometric view, the multi-configuration chassis complete with rigid chassis assembly, front fork assembly, rear fork assembly and saddle assembly;
- Fig. 3 shows, in a partially sectioned axonometric view, only the rigid chassis;
- Fig. 4 shows, in a partially sectioned transparent side view, the multi-configuration chassis complete with transmission assembly and rear wheel;
- Fig. 5 shows, in partially sectioned transparent side view, the system for adjusting the front fork assembly;
- Fig. 6 shows a diagram of the kinematic mechanism structure of the system for adjusting the front fork assembly;
- Fig. 7 shows, in a partially sectioned transparent side view, the system for adjusting the rear fork assembly and the saddle assembly;
- Fig. 8 shows a diagram of the kinematic structure of the system for adjusting the rear fork assembly and the saddle assembly;
- Figs. 9, 10 and 11 represent, respectively in a partially sectioned perspective view, in a top plan view and in a section along the line XI-XI of Fig. 10, the system for adjusting the length of the front forks.

With reference to the details of the figures, a motorcycle with multi-configuration chassis comprises:
- a rigid chassis assembly Z6 for supporting the engine and the auxiliary fuel feed and mechanical devices;
- a rear fork assembly D;
- a front fork assembly Z1;
- a saddle assembly A4.

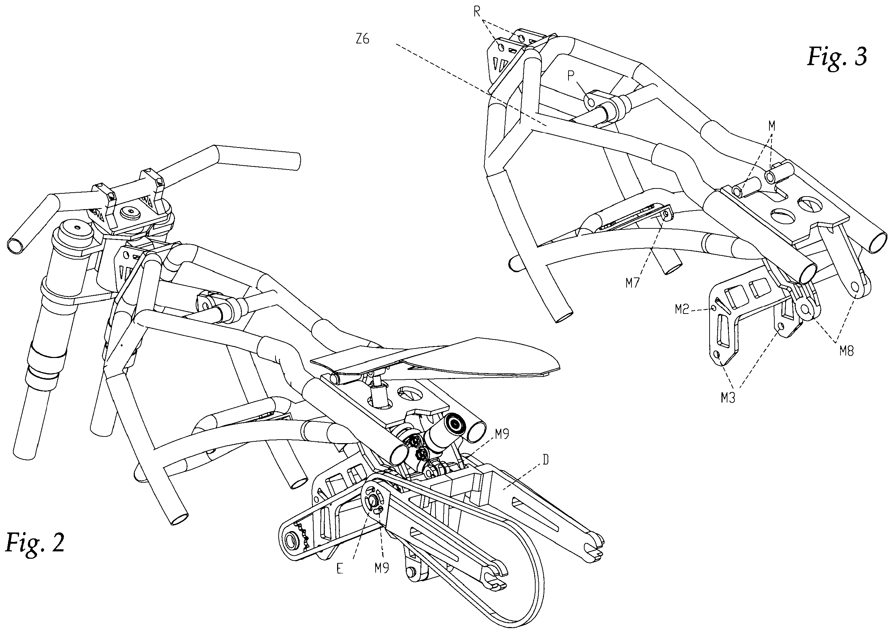

With reference to Figs. 2, 3 and 4, the engine of the motorcycle is connected to the rigid chassis Z6 in the points M2, M3 and M7. The output pinion M1 of the engine transmits motion to the double pinion A2 by means of the chain A1. The double pinion rotates mounted on a shaft in the point E, the shaft is housed on bushings fixed in the points M8 in the rigid chassis and in the points M9 in the rear fork D. The seats M8 and M9 are concentric to the point E. By means of the chain A3 the double pinion transmits motion to the wheel rotatable with axle in the point D1.

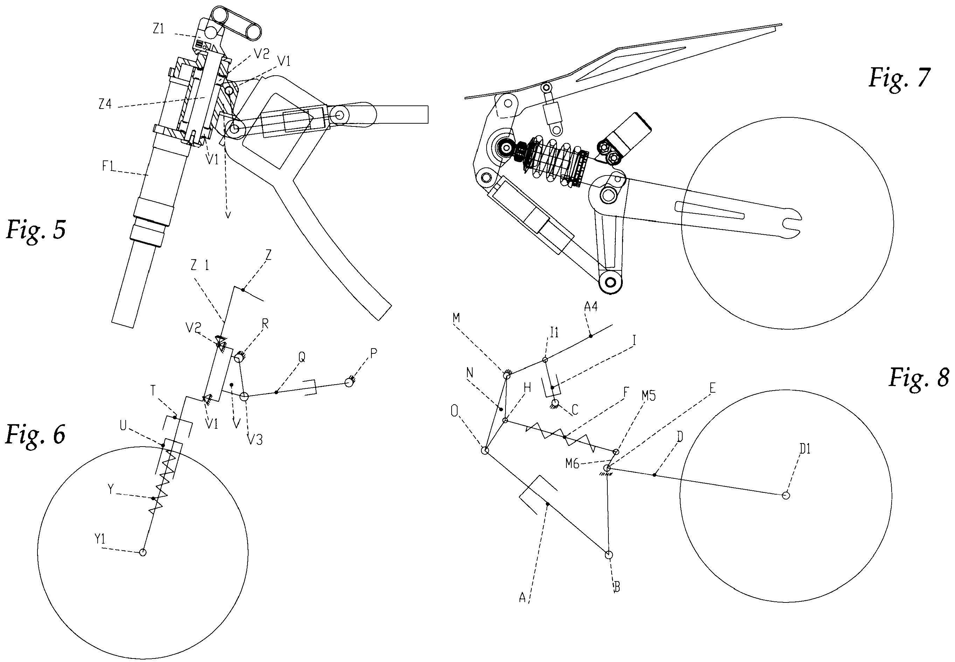

Figs. 5, 6, 7 and 8 schematically show the front fork, rear fork and saddle assemblies, and the structural diagrams of their kinematic mechanisms for adjustment.

With reference to Figs. 5 and 6, the tilt of the fork F1 of the front wheel is implemented by means of varying the length of the rod Q connected to the chassis by means of the hinge P.

The rod Q can either be a hydraulic or electric cylinder or any other linear actuating means that allows the rod Q to extend or retract. The rod with variable length Q is connected to the rigid body V for supporting the forks by means of the connection V3.

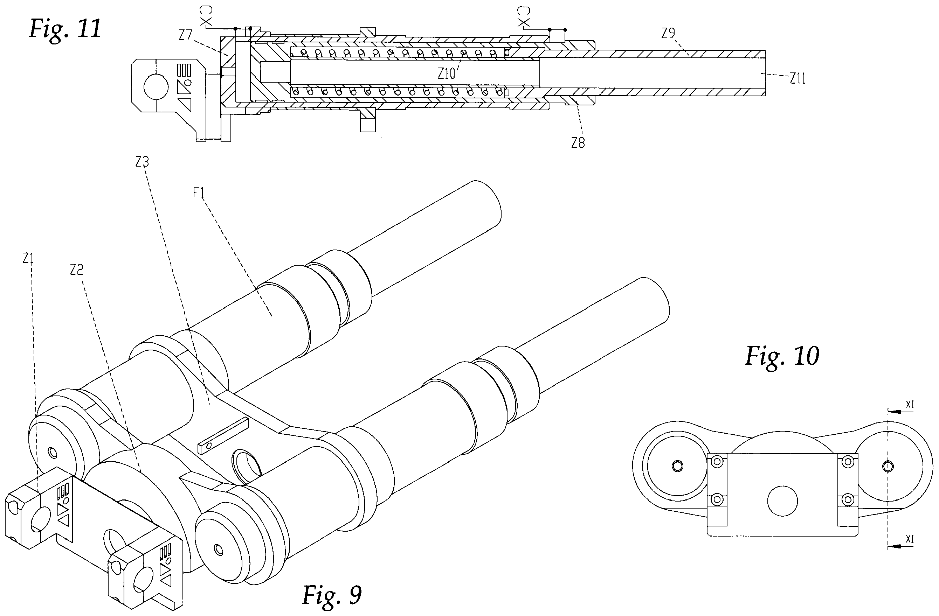

Rotation of the body V around the fulcrum R, connected to the rigid chassis, allows rotation of the forks. The body V, by means of the bearings V1 and V2, acts both as axial and radial support for the front fork assembly F1 and handlebar mounting Z1, better represented in Figs. 9, 10 and 11.

The body V, in jargon "steering head", is anchored to the forks and to the handlebar mounting through the plates Z2 and Z3 represented in Fig. 9.

With reference to Figs. 5, 9 and 10, there is depicted the pin Z4 that connects the body V to the fork F1-fork plate Z2, Z3 and handlebar mounting Z1 assembly.

With reference to Fig. 11, the front forks are adjustable in length. The cylinder Z7 incorporates a shock absorber formed by the cylinder Z8, by the stem Z9 and by the spring Z10.

By feeding oil into the cylinder Z7, in the case in which the system is hydraulic, the cylinder Z8 moves and the whole of the hydraulic shock absorbing system moves as a consequence.

The actuator that moves the shock absorber can be a hydraulic cylinder, such as the component Z9, or can be electric, or implemented with any other linear system of known type.

The rear fork assembly D illustrated in Fig. 8 is connected to the rigid chassis assembly by means of the points M and E.

The rear fork indicated with the letter D is hinged to the rigid chassis assembly in the fulcrum E. The fork, schematized as rigid body, rotates around the point E by means of the rod with variable length indicated with the letter A. The fork D is hinged to the rod A by means of the hinge B. The rod A, variable in length, is a hydraulic cylinder (variable rod) that can also be an electric cylinder or an automatic linear guide, according to the manufacturer's needs.

The extension or retraction of the rod A allows rotation of the fork D, which determines an increase or decrease of the pitch of the motorcycle and/or a decrease or lowering of the height of the saddle from the ground, this latter also being adjustable by varying the configuration of the front forks.

The rod A, which for simplicity is identified with the name of the cylinder, is connected to the rigid body N by means of the hinge O.

The rigid body N is hinged to the rigid chassis assembly by means of the point M. The rigid body N, by means of the hinge H, is connected to the rod with variable length indicated with the letter F.

The rod with variable length F is the rear shock absorber of the motorcycle. The shock absorber is connected to the rigid body which is the fork D, by means of the hinge M5.

The shock absorber F exerts a resistant moment around the fulcrum E through to the arm M6 of the fork D. Once the travel of the cylinder A has been blocked, the kinematic mechanism allows the wheel to move so as to compress the shock absorber F.

The kinematic mechanism also works if the positions of the cylinder A and the shock absorber F are inverted, so that the cylinder A takes the position of the shock absorber F and vice versa.

The substantial difference lies in the operation of the shock absorber, which in the configuration indicated in Figs. 7 and 8, is a shock absorber that works in compression, i.e., it is compressed, while with the second construction method, which can in any case be implemented with the same kinematic mechanism, it works in traction, i.e., it is extended.

Adjustment of the tilt of the saddle assembly A4 is reproduced in Figs. 5 and 6.

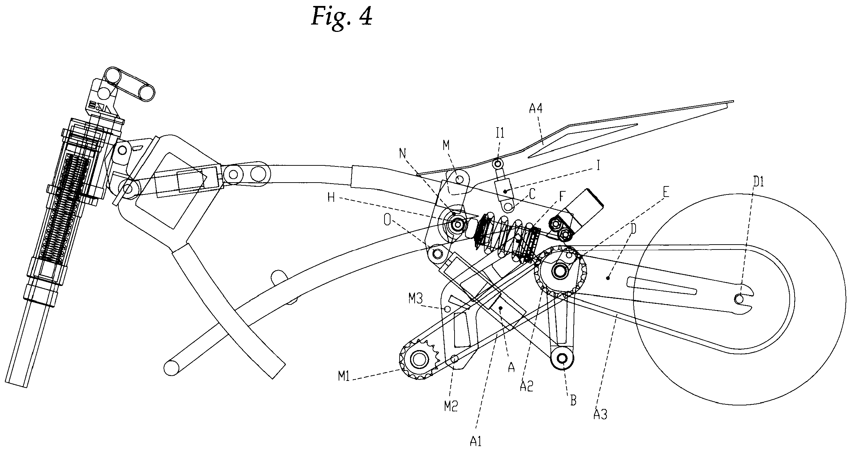

The saddle A4 rotates around the fulcrum M, connected to the rigid chassis Z6, as illustrated in Figs. 4, 7 and 8, through the rod with variable length I, which can be a cylinder or a variable linear element.

The rod I is hinged in the point C connected to the rigid chassis and in the point I1 connected to the saddle A4.

## Claims

1. Motorcycle with multi-configuration chassis comprising:
- a rigid chassis assembly (Z6) for supporting the engine and the auxiliary fuel feed and mechanical devices;
- a rear fork assembly;
- a front fork assembly;
- a saddle assembly,
wherein said multi-configuration chassis comprises hydraulic or electric cylinders adapted to modify their length to allow three adjustments selected from the following: rear fork assembly lengthening, , front fork assembly lengthening, saddle assembly tilt, and
said front fork assembly comprises a hydraulic or electric cylinder (Z7) incorporating in a sliding manner a shock absorber consisting of a cylinder (Z8), of a stem (Z9) and of a spring (Z10); said saddle assembly comprises:-a saddle (A4) connected to the rigid chassis by means of a hinge with fulcrum (M);- a rod with variable length (I) comprising a hydraulic or electric cylinder having a first end connected to the rigid chassis assembly (Z6) by means of a hinge (C) and a second end connected to the saddle (A4) by means of a hinge connection (11), and
**characterized in that** said hydraulic or electric cylinders are adapted to change their length to allow also a fourth type of adjustment by means of a front fork assembly tilt,
wherein:
said rear fork assembly comprises:
- a rigid fork (D) hinged to the rigid chassis assembly (Z6) in a fulcrum (E);
- a rod with variable length comprising a hydraulic or electric cylinder having a first end connected to the fork (D) by means of a hinge (B) and a second end connected to a rigid body (N) by means of a hinge connection (O);
- a rigid body (N) rotatingly connected to the rigid chassis assembly (Z6) by means of a hinge (M);
- a rod with variable length (F) forming the rear shock absorber of the motorcycle having a first end connected to the rigid fork (D) by means of a hinge (M5) and an arm (M6) and a second end connected to the rigid body (N) by means of a hinge connection (H);
said front fork assembly comprises a rigid support body (V), connected to said rigid chassis assembly (Z6) by means of a pivot (R), and a hydraulic or electric cylinder (Q) comprising a first end connected to the rigid chassis assembly (Z6) by means of a hinge (P) and a second end connected to said rigid support body (V) of the front fork assembly by means of a hinge connection (V3).

## Patentansprüche

1. Motorrad mit Multikonfigurationschassis, umfassend:
- eine starre Chassis-Baugruppe (Z6) zur Aufnahme des Motors und der zusätzlichen Kraftstoffzufuhr und der mechanischen Vorrichtungen;
- eine hintere Gabel-Baugruppe;
- eine vordere Gabel-Baugruppe;
- eine Sattel-Baugruppe,
wobei das besagte Multikonfigurationschassis hydraulische oder elektrische Zylinder umfasst, die geeignet sind, ihre Länge verändern zu können, um drei Einstellungen zu ermöglichen, die aus den folgenden ausgewählt sind: Verlängerung der hinteren Gabel-Baugruppe, Verlängerung der vorderen Gabel-Baugruppe, Neigung der Sattel-Baugruppe, und
die besagte vordere Gabel-Baugruppe einen hydraulischen oder elektrischen Zylinder (Z7) umfasst, der gleitend einen Stoßdämpfer enthält, der aus einem Zylinder (Z8), einem Schaft (Z9) und einer Feder (Z10) besteht; die besagte Sattel-Baugruppe umfasst: - einen Sattel (A4), der mittels eines Gelenks mit Drehpunkt (M) mit dem starren Chassis verbunden ist;- eine Stange mit variabler Länge (I), die einen hydraulischen oder elektrischen Zylinder umfasst, dessen erstes Ende mittels eines Gelenks (C) mit der starren Chassis-Baugruppe (Z6) verbunden ist und dessen zweites Ende mittels einer Gelenkverbindung (11) mit dem Sattel (A4) verbunden ist, und
**dadurch gekennzeichnet, dass** die besagten hydraulischen oder elektrischen Zylinder geeignet sind, ihre Länge verändern zu können, um auch eine vierte Art der Einstellung mittels einer Neigung der vorderen Gabel-Baugruppe zu ermöglichen,
wobei:
die besagte hintere Gabel-Baugruppe umfasst:
- eine starre Gabel (D), die in einem Drehpunkt (E) an der starren Chassis-Baugruppe (Z6) drehbar verbunden ist;
- eine Stange mit variabler Länge, die einen hydraulischen oder elektrischen Zylinder umfasst, dessen erstes Ende mit der Gabel (D) mittels eines Gelenks (B) verbunden ist, und dessen zweites Ende mit einem starren Körper (N) mittels einer Gelenkverbindung (O) verbunden ist;
- einen starren Körper (N), der mittels eines Gelenks (M) drehbar mit der starren Chassis-Baugruppe (Z6) verbunden ist;
- eine Stange mit variabler Länge (F), die den hinteren Stoßdämpfer des Motorrads bildet, mit einem ersten Ende, das mit der starren Gabel (D) mittels eines Gelenks (M5) und eines Arms (M6) verbunden ist, und einem zweiten Ende, das mit dem starren Körper (N) mittels einer Gelenkverbindung (H) verbunden ist;
die besagte vordere Gabel-Baugruppe umfasst einen starren Stützkörper (V), der mit der besagten starren Chassis-Baugruppe (Z6) mittels eines Drehpunkts (R) verbunden ist, und einen hydraulischen oder elektrischen Zylinder (Q), dessen erstes Ende mit der starren Chassis-Baugruppe (Z6) mittels eines Gelenks (P) verbunden ist, und dessen zweites Ende, das mit dem besagten starren Stützkörper (V) der vorderen Gabel-Baugruppe mittels einer Gelenkverbindung (V3) verbunden ist.

## Revendications

1. Motocyclette dotée d'un châssis à configurations multiples comprenant :
- un ensemble châssis rigide (Z6) permettant de supporter le moteur et les dispositifs mécaniques et d'alimentation en carburant auxiliaire ;
- un ensemble fourche arrière ;
- un ensemble fourche avant ;
- un ensemble selle,
où ledit châssis à configurations multiples comprenant au moins un vérin hydraulique ou électrique conçu pour modifier sa longueur pour permettre au moins trois ajustements choisis parmi les suivants : allongement de l'ensemble fourche arrière, allongement de l'ensemble fourche avant, inclinaison de l'ensemble selle, et
ledit ensemble fourche avant comprend un vérin hydraulique ou électrique (Z7) incorporant de manière coulissante un amortisseur de chocs constitué d'un vérin (Z8), d'une tige (Z9) et d'un ressort (Z10) ; ledit ensemble selle comprend : - une selle (A4) reliée au châssis rigide au moyen d'une charnière avec pivot (M) ; - une tige à longueur variable (I) comprenant un vérin hydraulique ou électrique ayant une première extrémité reliée à l'ensemble châssis rigide (Z6) au moyen d'une charnière (C) et une seconde extrémité reliée à la selle (A4) au moyen d'une connexion articulée (11), et **caractérisée par le fait que** lesdits vérins hydrauliques ou électriques sont adaptés pour modifier leur longueur afin de permettre également un quatrième type d'ajustement au moyen d'une inclinaison de l'ensemble fourche avant,
où :
ledit ensemble fourche arrière comprend :
- une fourche rigide (D) articulé sur l'ensemble châssis rigide (Z6) dans un pivot (E) ;
- une tige à longueur variable comprenant un vérin hydraulique ou électrique ayant une première extrémité reliée à la fourche (D) au moyen d'une charnière (B) et une seconde extrémité reliée à un corps rigide (N) au moyen d'une liaison articulée (O) ;
- un corps rigide (N) relié de manière rotative à l'ensemble châssis rigide (Z6) au moyen d'une charnière (M) ;
- une tige de longueur variable (F) formant l'amortisseur arrière de la motocyclette ayant une première extrémité reliée à la fourche rigide (D) au moyen d'une charnière (M5) et d'un bras (M6) et une seconde extrémité reliée au corps rigide (N) au moyen d'une liaison articulée (H) ;
ledit ensemble fourche avant comprend un corps de support rigide (V), relié audit ensemble châssis rigide (Z6) au moyen d'un pivot (R), et un vérin hydraulique ou électrique (Q) comprenant une première extrémité reliée à l'ensemble châssis rigide (Z6) au moyen d'une charnière (P) et une seconde extrémité reliée audit corps de support rigide (V) de l'ensemble fourche avant au moyen d'une connexion articulée (V3).
